(19) **Europäisches Patentamt / European Patent Office / Office européen des brevets**

(11) **EP 4 455 800 A1**

(12) # EUROPEAN PATENT APPLICATION

(43) Date of publication:
**30.10.2024 Bulletin 2024/44**

(21) Application number: **23170126.9**

(22) Date of filing: **26.04.2023**

(51) International Patent Classification (IPC):
***G05B 13/02*** *(2006.01)*

(52) Cooperative Patent Classification (CPC):
**G05B 13/027; G06N 3/0442; G06N 3/09;
G06N 3/096; G06N 5/01; G06N 20/20**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **SCHNEIDER ELECTRIC INDUSTRIES
SAS
92500 Rueil-Malmaison (FR)**

(72) Inventors:
• **DELGADO FERNANDEZ, Carlos Alberto
38600 FONTAINE (FR)**
• **BOGUSLAWSKI, Bartosz
38100 GRENOBLE (FR)**
• **ABDALI, Aymane
38000 GRENOBLE (FR)**
• **PESANDO, Florent
38130 ECHIROLLES (FR)**

(74) Representative: **Plasseraud IP
104 Rue de Richelieu
CS92104
75080 Paris Cedex 02 (FR)**

(54) ## METHOD FOR TRAINING A MODEL ABLE TO PREDICT A POWER CONSUMPTION OR PRODUCTION OF AT LEAST ONE ELECTRIC EQUIPMENT

(57)     Method for training at least one model able to predict a power consumption or production of at least one electric equipment, also called target, said method comprising:

(a) obtaining (S1) time series data representing the evolution of the power consumption or production of said target over a first period of time,

(b) comparing (S2) said target time series data to known time series data representing the evolution, over a second period of time, of the power consumption or production of known electric equipments, said second period of time being greater than the first period of time, to determine the k known time series data that are the most similar to the target time series data,

(c) training (S3) of a first prediction model or backbone for each of said k known electric equipments, said backbone being able to predict the evolution over time of the consumption or the production of the corresponding known electric equipment, said backbone being trained on the corresponding time series data over the second period of time,

(d) training (S4) at least one second prediction model, called target model, by fine tuning at least one of the first trained prediction model on the time series data of said target over the first period of time.

Fig. 2

**Description**

**Technical Field**

The present disclosure relates to a method for training at least one model able to predict a power consumption or production of at least one electric equipment, also called target.

**Prior art**

Smart Energy Management Systems (SEMS) are crucial for minimizing CO2 emissions and optimizing energy consumption in buildings. Accurate energy forecasting models are necessary for SEMS to estimate available energy resources and create management strategies. The present document proposes a Cold Start approach that utilizes Few-Shot Learning to enhance the training of forecasting models for new building scenarios with limited or low-quality data. By using data from past buildings with similar characteristics, SEMS can achieve their energy management goals and reduce energy waste in the early deployment phase, resulting in environmental benefits, economic savings, and increased market value.

Digitalization is taking an important role in numerous industries such as industrial automation, business, healthcare, and energy optimization [B1]. Within this domain, approaches such as simulation and data-driven models are common for describing the behaviour of buildings and helping them reach their performance objectives [B1],[B2]. Nevertheless, both approaches bring their challenges, such as complexity or dependency on quality, amount, and diversity of available data [B3]. The method according to the present document is notably applicable to the energy consumption forecasting for buildings, a common component widely used in HVAC (Heating, Ventilation and Air-conditioning) and other SEMS for which model flexibility and adaptability are crucial requirements [3].

In the literature, applications of time-series forecasting for energy consumption have been explored both with classical Machine Learning (ML) and Deep Learning (DL) approaches. Since both approaches rely on historical data, recently instrumented buildings may not achieve their performance goals due to inaccurate energy estimations [B4][B5].

The present document proposes a method that overcome this limitation.

**Summary**

To this aim, the present document proposes a method for training at least one model able to predict a power consumption or production of at least one electric equipment, also called target, said method comprising the following steps:

(a) obtaining time series data representing the evolution of the power consumption or production of said target over a first period of time,

(b) comparing said target time series data to known time series data representing the evolution, over a second period of time, of the power consumption or production of known electric equipments, said second period of time being greater than the first period of time, to determine the k known time series data that are the most similar to the target time series data,

(c) training of a first prediction model or backbone for each of said k known electric equipments, said backbone being able to predict the evolution over time of the consumption or the production of the corresponding known electric equipment, said backbone being trained on the corresponding time series data over the second period of time,

(d) training at least one second prediction model, called target model, by fine tuning at least one of the first trained prediction model on the time series data of said target over the first period of time.

Said model may be used to predict the power consumption or production of at least one building, or of a smart grid.

Said electric equipment may be a load (electric receiver). Said electric equipment may also be a power source (electric producer).

Loads may be lights, appliances (e.g. refrigerator, oven, dishwasher, washing machine), HVAC systems (e.g. air conditioning, heating), computer equipment (e.g. desktops, servers, printers), audio/visual equipment (e.g. TVs, speakers, projectors), security systems (e.g. cameras, alarms), elevators.

Power sources may be solar panels, backup generators, batteries (for storing excess energy generated) or wind turbines.

Time series data is a type of data that is collected over time, where the order of the data points or values is important, and each value is associated with a specific time stamp. In other words, time series data is a sequence of observations that are collected at regular intervals, such as daily, weekly, monthly, or yearly.

In the case of the invention, the interval of time may be an interval of few minutes or few hours. The interval of time may be an interval of 1 hour.

The first period of time may a period of few hours, few days or few weeks. The first period of time may be a period of at least 2 days, for example 3 days.

The second period of time may be a period of few months or few years. The second period of time may be a period of at least one year.

The target may be a building comprising one or more electric equipments.

The method according to the present document relies on Few-Shot Learning Adaptation (FSLA), which consists in pretraining a model with a large amount of generic available data (referred to as 'backbone') and transferring its knowledge into the new considered task [B6], i.e. the prediction of the electric consumption or production of the target on the basis of fewer data.

The pretrained backbone acts as a feature extractor and is adapted with a constrained amount of data for the target application [B5][B6]. By such means, it is possible to deliver an accurate forecasting model by strategically selecting the appropriate characteristics to train the backbone according to the properties of the target new building.

During step (d), a percentage of the layers, for example the last 20 % layers, are leaved as trainable whereas the weights of other layers are freezed. This will prevent their weights from being updated during training.

Also, during the training of the backbone or during the training of the target model, a regularization technique may be applied, such as early stopping.

At step (d), only one of the backbones is selected based on the performance of trained said backbones, said performance being evaluated during a test phase. Said performance may be evaluated using an appropriate metric, such as R2-Score.

To do so, the set of data used to train the backbones may be divided into a train set, a validation set and a test set.

The R2 score, also known as the coefficient of determination, is a statistical measure used to evaluate the performance of a regression model. It measures the proportion of the variance in the dependent variable that is explained by the independent variables in the model.

The R2 score ranges from 0 to 1, with a score of 1 indicating that the model perfectly predicts the target variable, and a score of 0 indicating that the model does not explain any of the variability in the target variable.

The formula for calculating the R2 score is as follows:

$$R2 = 1 - (\text{sum of squared residuals} / \text{total sum of squares})$$

where the sum of squared residuals is the sum of the squared differences between the predicted and actual values of the target variable, and the total sum of squares is the sum of the squared differences between the actual target variable values and the mean of the target variable.

The R2 score is commonly used to compare the performance of different regression models, and to determine whether a model is a good fit for the data.

Other metrics, such as mean squared error (MSE) and root mean squared error (RMSE), may also be used to evaluate the model's accuracy and ability to generalize to new data.

The known time series data may be found in a published dataset identified in [B7], which contains hourly samples of more than a hundred of buildings with anonymized load or power consumption, temperature, holidays, and working days information.

The electric load refers to the amount of electrical power that is required to operate all the electrical equipments or appliances.

Tuning in machine learning refers to the process of adjusting the hyperparameters of a machine learning model to improve its performance on a particular task.

Hyperparameters are configuration variables that are set prior to training a model, and they control aspects such as for example learning rate, number of hidden layers, and regularization strength.

During tuning, the hyperparameters are adjusted and the model is retrained to find the best set of hyperparameters that enhance the performance of the model on a validation set.

Fine-tuning is a specific type of tuning that involves taking a pre-trained model and adapting it to a new task by retraining it on a new dataset. This can be particularly useful when working with limited amounts of labeled data, as the pre-trained model already has a good understanding of the underlying features of the data.

Each first prediction model and second prediction model may be a recurrent neural network, for example a LSTM.

The use of a recurrent neural network is adapted to provide predictions on the basis of time series data.

LSTM stands for Long Short-Term Memory, which is a type of recurrent neural network (RNN) architecture that is designed to address the vanishing gradient problem often encountered in traditional RNNs. In an LSTM network, each recurrent unit has an internal memory cell that can store information over a long period of time. The network uses a series of gates to control the flow of information into and out of the memory cell, allowing it to selectively remember or forget certain information.

Each time series data may comprise successive values each associated to a specific time stamp, each value being a tensor comprising dimensions or features representing respectively:

- the power consumption or production of said target,
- the outside temperature,
- the seasonality of the corresponding power consumption or production.

The power consumption or production of said target may be a consumption or production per square area or per volume of a building, when the target is a building.

The power consumption or production may be normalized, for example through gaussian normalization.

Gaussian normalization, also known as Gaussian scaling or standardization, is a type of data normalization technique that transforms the data into a standard Gaussian distribution.

The goal of Gaussian normalization is to rescale the data so that it has a mean of 0 and a standard deviation of 1. This is achieved by subtracting the mean of the data from each data point, and then dividing the result by the standard deviation.

The formula for Gaussian normalization can be expressed as:

$$x\_norm = (x - mean) / std$$

where x is the original data, mean is the mean of the data, std is the standard deviation of the data, and x_norm is the normalized data.

Gaussian normalization helps to reduce the impact of outliers and make it easier to compare data from different sources. It can also improve the performance of certain machine learning algorithms, such as those that are sensitive to the scale of the input data.

The outside temperature may be given bv a sensor or a weather station located outside and near the corresponding building when the target is a building.

The features representing the seasonality may represent at least one of at least part of the following information:

(e) open or closed state of the target building,
(f) holiday or not
(g) time of day, preferably encoded using cyclical encoding,
(h) days of the week, preferably encoded using cyclical encoding,
(i) days of the month, preferably encoded using cyclical encoding,
(j) week of the year, preferably encoded using cyclical encoding,
(k) month of the year, preferably encoded using cyclical encoding.

Cyclical encoding of data using sine and cosine functions is a technique used to represent data points as points on a unit circle in a two-dimensional space. This encoding method is often used in signal processing and communication systems, as it provides a way to efficiently represent periodic signals.

The target model may be re-trained at successive time interval, on the time series data of said target over an extended first period of time.

In other words, the target model can be initially trained when a small but sufficient number of data has been collected during the first period of time, and then be trained again, for example every day or every week, based on the time series data of the target collected during the first time period increased by the corresponding time interval (extended first period of time).

Method according to any of the preceding claim, wherein, during training of the backbone and/or during training of the target model, sequences are extracted from the corresponding time series data and are associated by pairs, each pair comprising an input sequence, used as an input data from which to determine a prediction, and a target segment forming a ground-truth prediction to be found by the model on the basis of the first segment, said segment being located temporally after the first segment in the corresponding time series data.

Training a model, for example a RNN, on time series data typically involves dividing the data into input sequences and target sequences. Each input sequence contains a set of time steps, and the corresponding target sequence contains the values that the model should predict at each time step, for example 24 hours after the input sequence.

The input sequences are fed into the model one at a time, and the model updates its internal state based on the information contained in the input sequence. The output of the model at each time step is compared to the corresponding target value, and the weights of the model are adjusted to minimize the difference between the predicted values and the target values.

The time series data may be divided into fixed-length sequence (for example few hours sequences, more particularly 3-hours sequences) or variable-length sequences.

Step (b) may comprise the following sub-steps:

(b1) converting the time domain signals of the time series data into frequency domain,
(b2) analyzing the frequency components of the signals to identify the frequency bands or peaks that are most important in characterizing the signals,
(b3) extract the features that capture the frequency signature of the signals,
(b4) measure the distance between the frequency signatures of the signals,
(b5) determine the k signals that are the less distant from the target time series data.

The method thus defines the similarity of said time series signals based on frequency signature, which involves analyzing the frequency components of the signals and comparing them to identify similarities.

Substep (b1) may be performed using Fourier Transform (FT) or a variant of it such as Discrete Fourier Transform (DFT), Fast Fourier Transform (FFT), or Short-Time Fourier Transform (STFT).

Substep (b2) may be performed by looking for peaks in the frequency spectrum that are significantly higher than the surrounding frequencies. These peaks indicate the frequencies that are most important in characterizing the signal. Frequency bands that contain multiple peaks, may also indicate a more complex signal.

The features of substep (b3) may include the frequency bands with the highest energy or amplitude, the frequency peaks or harmonics, the frequency distribution, or other statistical measures.

Substep (b4) may be performed by choosing an appropriate distance metric to measure the similarity between the frequency signatures of the signals. Such metric may be Euclidean distance, Cosine similarity, Dynamic Time Warping (DTW), or Pearson correlation coefficient.

By defining similarity of time series signals based on frequency signature, it is possible to identify patterns and similarities in time series data that may be difficult to detect in the time domain.

Alternatively, step (b) may comprise the following sub-steps:

(b1) converting the time domain signals of the time series data into frequency domain,
(b2) calculating the power spectral density (PSD) for each for each time series using the frequency spectrum obtained in step (b1).
(b3) comparing the PSDs of the time series

Again, substep (b1) may be performed using Fourier Transform (FT) or a variant of it such as Discrete Fourier Transform (DFT), Fast Fourier Transform (FFT), or Short-Time Fourier Transform (STFT).

The power spectral density represents the distribution of power (or energy) of a signal across different frequencies.

In substep (b2), the power spectral density can be calculated by taking the square of the magnitude of the Fourier transform at each frequency, which gives the power at each frequency and represents the amount of energy in the signal at that frequency.

To compare power spectra between signals, the power spectrum may be normalized. One way to apply such normalization is to divide the power at each frequency by the total power in the signal.

In substep (b3), if the PSDs have similar shapes and peaks, then the time series are likely to be similar. The PSDs can be visually compared by plotting them on the same graph or by computing a distance metric such as Euclidian distance, cosine similarity or cross-correlation for example.

Step (b) may also comprise an application of a multiplicative filter to emphasize the most relevant frequencies and remove the noise from the data, before measuring the distance between the frequency signatures of the signals. Such multiplicative filter may be trained to learn to maximize the correlation between the frequencies' similarity and the performance of the backbone. The multiplicative filter may be learned by weighting frequency by a factor between 0 and 1.

Multiplicative filters are a type of statistical model that may be used to extract seasonal and trend patterns from time series data. They may be used in forecasting applications, where it is necessary to predict future values of a time series based on historical data.

A multiplicative filter is a mathematical function that separates the time series into its underlying seasonal, trend, and residual components. The filter works by dividing the original time series into a seasonal component, a trend component, and a random component (i.e., the residuals) that captures the unexplained variation in the data. The seasonal component represents the periodic variation in the data, while the trend component captures the long-term upward or downward movement in the data.

Multiplicative filters are particularly useful for time series data that exhibit a regular seasonal pattern and a trend. By separating these components, it becomes easier to analyze and forecast the data. Multiplicative filters are also robust to changes in the data, making them suitable for modeling time series with varying patterns over time.

Multiplicative filters may be implemented using methods such as the Holt-Winters method, which uses a combination of exponential smoothing and trend and seasonal smoothing to model the time series data.

Step (b) may comprise a selection of the time series data of known electric equipments having an evolution of electrical consumption or production as a function of the outdoor ambient temperature that is similar to said evolution of the target.

In case of a building, said evolution may be the evolution of the load of the building (with its equipment) as a function of the outdoor ambient temperature.

Such comparison of said evolution may be based on the thermal signature of the known equipment (or known buildings with their electrical equipment) compared to the thermal signature of the target equipment or target building with its equipment.

Such comparison may be performed by comparing the breaking inflection points in the chart of load vs outdoor ambient temperature of a building for example. Characteristics of such a chart is for example stablished by the ASHRAE guideline 14 appendix D4 (see reference [B8]). In such chart a maximum of 5 coordinated X,Y points are defined to describe the behavior of the energy consumption in relation with the temperature (being X the axis of temperature, and Y the consumption).

To obtain a point, ASHRAE guideline may recommend using linear regression to determine the trend changes of the chart and set the inflection points as the coordinates. Models may use a record of dialy mean, maximum, and minimum values of the energy consumption and the external temperature. The extremes are taken by defaults as points to such arrange of points is called the thermal signature.

This set of coordinated points is then used to compare the thermal behavior similarity of the source building to the target building. This comparison can be either general by measuring the number of inflection points, or it can be more accurate by measuring the magnitudes and position of such points.

The present document also concerns a computer program comprising instructions for implementing the above-mentioned method, when this program is executed by a processor.

The present document also concerns a non-transitory computer-readable recording medium on which is recorded a program for implementing the above-mentioned method, when said program is executed by a processor.

The present document also concerns a computer device comprising:

- an input interface to receive at least one input time series signal,
- a memory for storing at least instructions of an above-mentioned computer program,
- a processor accessing to the memory for reading the aforesaid instructions and executing then the above-mentioned method,
- an output interface to provide the trained target model.

**Brief description of the drawings**

Other features, details and advantages will become apparent from the detailed description below, and from an analysis of the attached drawings, in which:

[Fig. 1] is a schematic diagram illustrating a computer device according to the present document,
[Fig. 2] is a schematic diagram illustrating the method according to the present document.
[Fig. 3] comprises a diagram illustrating the evolution of the load of a particular building as a function of the time, for different prior art or baseline methods and for methods according to the present document, and a diagram representing the evolution over time of the R2-score for each prediction model,
[Fig. 4] illustrate diagrams similar to figure 3 where prediction models are fined tuned using only 20% trainable layers versus prediction models where all the layers where trained.
[Fig. 5]. illustrate diagrams similar to figure 3 where prediction models are trained on the basis of different backbones.

The annexed drawing includes meaningful colors. Although the present application is to be published in black and white, a colored version of the annexed drawing was filed before the European Patent Office.

**Detailed description of the drawings**

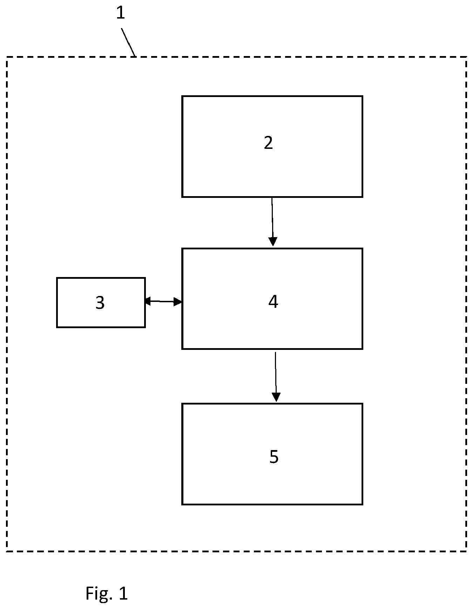

Figure 1 shows a computer device 1 comprising:

- an input interface 2 to receive said at least one time series signals from said sensor 2,

- a memory 5 for storing at least instructions of a computer program and executing a method according to the present document, described below,
- a processor 6 accessing to the memory 3 for reading and executing the aforesaid instructions,
- an output interface 7.

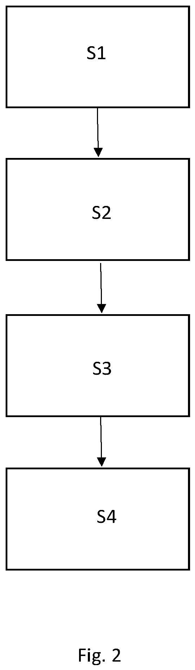

The method according to the present document is shown in Figure 2. Said method aims to train a model able to predict a power consumption or production of at least one electric equipment, also called target. Said target may be a building.

Said method comprises a first step S1 of obtaining time series data representing the evolution of the power consumption or production of said target over a first period of time, for example a period of at least three days. The time series data comprises hourly values.

Each value is associated to a specific time stamp, each value comprising information about

- the power consumption or production of said target, for example the consumption or production per square area or per volume of a building, when the target is a building. The power consumption or production may be normalized, for example through gaussian normalization.
- the outside temperature,
- open or closed state of the target building,
- holiday or not
- time of day, preferably encoded using cyclical encoding,
- days of the week, preferably encoded using cyclical encoding,
- days of the month, preferably encoded using cyclical encoding,
- week of the year, preferably encoded using cyclical encoding,
- month of the year, preferably encoded using cyclical encoding.

In a second step, S2, said target time series data are compared to known time series data stored in a database and representing the evolution, over a second period of time, of the power consumption or production of known electric equipments (for known buildings), said second period of time being greater than the first period of time. Said second period of time is for example equal to at least one year.

Said comparison aims to determine the k known time series data that are the most similar to the target time series data, where k may be equal to 5.

To that aim, step S2 may comprise a prior selection of the time series data of known electric equipments having a thermal signature similar to the thermal signature of the target.

The similarity comparison is done in S2 by comparing the vector of coordinates (X,Y) (Temperature, Load) obtained in the thermal signature analysis according to the ASHRAE guideline 14 appendix D4 (see reference [B8]). In first phase, the comparison may be done by comparing the number of coordinated inflection points required to describe the thermal behavior. In a second phase, if by means of expert knowledge (for example using models), particular information of the location of such (X,Y) points, distance between target and the available source data catalog is measured for identifying those time-series who share higher similarity.

Then, step S2 may comprise the following sub-steps:

- converting the time domain signals of the selected time series data into frequency domain, for example using FFT algorithm,
- analyzing the frequency components of the signals to identify the frequency bands or peaks that are most important in characterizing the signals,
- extract the features that capture the frequency signature of the signals,
- measure the distance between the frequency signatures of the signals,
- determine the k signals that are the less distant from the target time series data.

The method then comprises a third step S3 where a first prediction model or backbone is trained for each of said k known electric equipments, said backbone being able to predict the evolution over time of the consumption or the production of the corresponding known electric equipment, said backbone being trained on the corresponding time series data over the second period of time,

Said model may be a recurrent neural network, for example a sequential LSTM.

During the training phase of each backbone, sequences are extracted from the corresponding time series data and are associated by pairs, each pair comprising an input sequence, used as an input data from which to determine a prediction, and a target segment forming a ground-truth prediction to be found by the model on the basis of the first segment, said segment being located temporally after (for example 24 hours after) the first segment in the corresponding time series data.

During such training phase, the input sequences are fed into the model one at a time, and the model updates its internal state based on the information contained in the input sequence. The output of the model at each time step is compared to the corresponding target value, and the weights of the model are adjusted to minimize the difference between the predicted values and the target values.

The time series data may be divided into fixed-length sequence (for example 3-hours sequences).

During the training of the backbones, a regularization technique may also be applied, such as early stopping.

In addition, performances of the trained backbones may be evaluated during a test phase using an appropriate metric, such as R2-Score.

In a fourth step S4 of said method, a second prediction model, called target model, may be trained by fine tuning the backbone having the highest performances on the time series data of said target over the first period of time (for example 3 days period).

During step S4, a percentage of the layers, for example the last 20 % layers, are leaved as trainable whereas the weights of other layers are frozen. A regularization technique may also be applied, such as early stopping.

The target model may be successively re-trained at successive time interval, as new data becomes available for the target.

Comparative examples

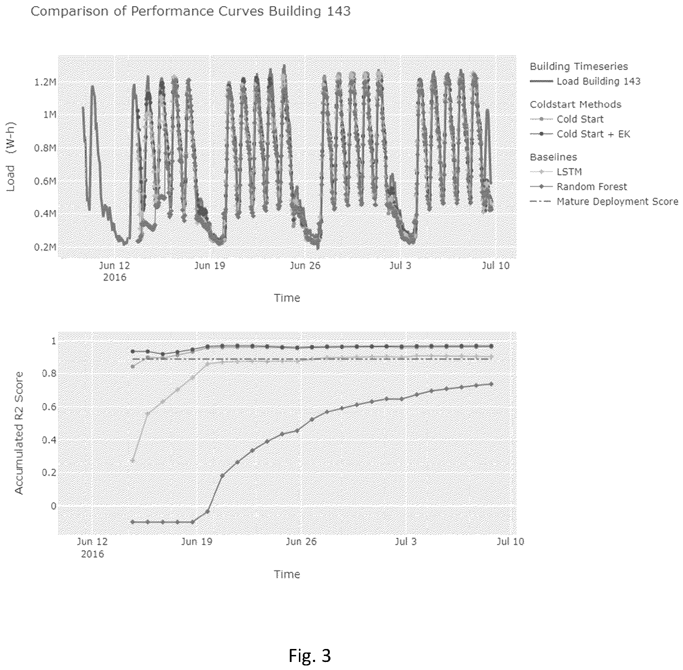

Figures 3 to 5 shows different comparative examples.

More specifically, figure 3 shows a first diagram and a second diagram.

The first diagram illustrates the evolution of the load of a particular building as a function of the time. The second diagram illustrates the evolution over time of the accumulated R2-score or performance.

In these diagrams are represented the following different curves:

- A first curve ("Load Building 143") illustrating real time series load data measured on a particular building referenced "Building 143",
- A second curve ("Cold Start") illustrating a prediction of said load over time where the prediction model is trained according to an example of the method according to the present document,
- A third curve ("Cold Start + EK") illustrating a prediction of said load over time where the prediction model is trained according to an example of the method according to the present document, where thanks to previous Expert Knowledge (EK), some additional information can be used for determining the tentative thermal signature of a building. Further more information may be added like the economic sector of the building, which strongly determines some of the frequency behaviour. In Figure, it can be seen, that this EK may significantly enhance the performance at the Cold Start deployment of a model. The gap between the Cold Start and the Cold Start +EK is due to deployment conditions at a season when target building is highly influenced by temperature. When such condition occurs, the closest building in terms of frequency may not perform in the best performance possible (among all options of dataset), and therefore the best option for training a backbone may be the second or even the third closest building in terms of frequency, but closest in term of thermal signature.
- A fourth curve ("LSTM") of a baseline method where the prediction model is a basic LSTM model trained on the 3-days data and retrained periodically based on past data,
- A fifth curve ("Random Forest") of a baseline method where the prediction model is a Random Forest model trained on the 3-days data and retrained periodically based on past data,
- A sixth curve ("Mature") illustrating the predictability threshold for the particular building 143, this value is obtained in a scenario where 1 year of data is used for the training of a model, and then the subsequent predictions are done with monthly periodic retraining. This value represents the higher score obtained between a LSTM and a Random Forest Method with the same features and characteristics that were described in previous points.

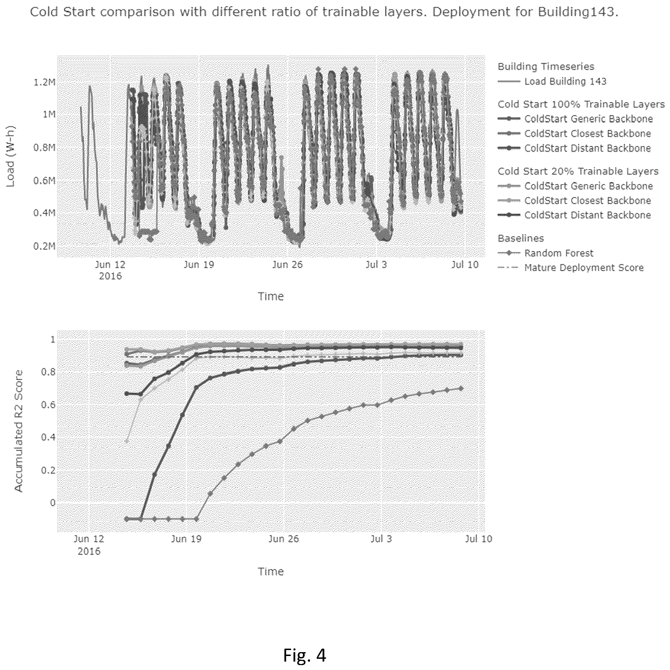

Figure 4 shows also said first and second diagrams, with the following different curves:

- A first curve ("Load Building 143") illustrating real time series data measured on a particular building referenced "Building 143",
- A second curve ("Cold Start Generic Backbone") illustrating a prediction of said load over time where the prediction model is trained with a method similar to the method according to the present document, with a generic backbone having a median performance, but where all the layers of the backbone are trainable,
- A third curve ("Cold Start Closest Backbone") illustrating a prediction of said load over time where the prediction model is trained with a method similar to the method according to the present document, with the backbone of the building being the most similar of the particular building 143, but where all the layers of the backbone are trainable,

- A fourth curve ("Cold Start Distant Backbone") illustrating a prediction of said load over time where the prediction model is trained with a method similar to the method according to the present document, with a backbone of the building being distance of the particular building 143, but where all the layers of the backbone are trainable,
- A fifth curve ("Cold Start Generic Backbone") illustrating a prediction of said load over time where the prediction model is trained with a method similar to the method according to the present document, with a generic backbone having a median performance, and where only 20% of the backbone last layers are trainable,
- A sixth curve ("Cold Start Closest Backbone") illustrating a prediction of said load over time where the prediction model is trained according to the method of the present document, with the backbone of the building being the most similar of the particular building 143, and where only 20% of the backbone last layers are trainable,
- A seventh curve ("Cold Start Distant Backbone") illustrating a prediction of said load over time where the prediction model is trained with a method similar to the method according to the present document, with a backbone of the building being distant of the particular building 143, and where only 20% of the backbone last layers are trainable,
- An eighth curve ("Random Forest") of a baseline method where the prediction model is a Random Forest model trained on the 3-days data and retrained periodically based on past data,
- A nineth curve ("Mature") illustrating the predictability threshold for the particular building 143, this value is obtained in a scenario where 1 year of data is used for the training of a model, and then the subsequent predictions are done with monthly periodic retraining. This value represents the higher score obtained between a LSTM and a Random Forest Method with the same features and characteristics that were described in previous points.

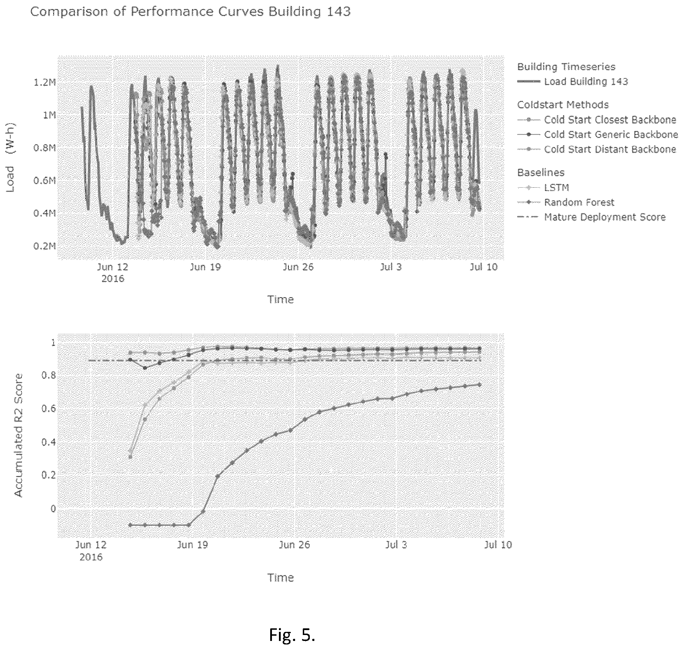

Figure 5 shows also said first and second diagrams, with the following different curves:

- A first curve ("Load Building 143") illustrating real time series data measured on a particular building referenced "Building 143",
- A second curve ("Cold Start Closest Backbone") illustrating a prediction of said load over time where the prediction model is trained with an example of the method according to the present document, with the backbone of the building being the most similar of the particular building 143, where only 20% of the backbone last layers are trainable,
- A third curve ("Cold Start Generic Backbone") illustrating a prediction of said load over time where the prediction model is trained with a method similar to the method according to the present document, with a generic backbone having a median performance, where only 20% of the backbone last layers are trainable,
- A fourth curve ("Cold Start Distant Backbone") illustrating a prediction of said load over time where the prediction model is trained with a method similar to the method according to the present document, with a backbone of the building being distance of the particular building 143, where only 20% of the backbone last layers are trainable,
- A fifth curve ("LSTM") of a baseline method where the prediction model is a LSTM model trained on the 3-days data and retrained periodically based on past data,
- A sixth curve ("Random Forest") of a baseline method where the prediction model is a Random Forest model trained on the 3-days data and retrained periodically based on past data,
- A seventh curve ("Mature") illustrating the predictability threshold for the particular building 143, this value is obtained in a scenario where 1 year of data is used for the training of a model, and then the subsequent predictions are done with monthly periodic retraining. This value represents the higher score obtained between a LSTM and a Random Forest Method with the same features and characteristics that were described in previous points.

As can be seen in Figures 3 to 5, the method for training a prediction model according to the present document provides trained models having increased performance compared to models trained with other methods.

## Bibliography

[B1] Cheng, L, Yu, T. A new generation of AI: A review and perspective on machine learning technologies applied to smart energy and electric power systems. Int J Energy Res. 2019; 43: 1928-1973. https://doi.org/10.1002/er.4333

[B2] Z. Zhou, J. Gong, Y. He and Y. Zhang, "Software Defined Machine-to-Machine Communication for Smart Energy Management," in IEEE Communications Magazine, vol. 55, no. 10, pp. 52-60, Oct. 2017, doi: 10.1109/MCOM.2017.1700169.

[B3] Dawn An, Nam H. Kim, Joo-Ho Choi, Practical options for selecting data-driven or physics-based prognostics algorithms with reviews, Reliability Engineering & System Safety, Volume 133, 2015, Pages 223-236, ISSN 0951-8320, https://doi.org/10.1016/j.ress.2014.09.014.

[B4] A. David, M. Alamir and C. L. Pape-Gardeux, "Data-driven modelling for HVAC energy flexibility optimization," 2022 IEEE PES Innovative Smart Grid Technologies Conference Europe (ISGT-Europe), Novi Sad, Serbia, 2022, pp. 1-5, doi: 10.1109/ISGT-Europe54678.2022.9960426.

[B5] Mouna Labiadh. Methodology for construction of adaptive models for the simulation of energy consumption in buildings. Modeling and Simulation. Université de Lyon, 2021. English. (NNT : 2021 LYSE1 158). (tel-03662903).

[B6] Parnami, A., & Lee, M. (2022). Learning from few examples: A summary of approaches to few-shot learning. arXiv preprint arXiv:2203.04291.

[B7] Schneider Electric "Forecasting building energy consumption". Consulted 21/03/2023. https://shop.exchange.se.com/en-US/apps/54008/forecasting-building-energy-consumption.

[B8] ASHRAE Guideline 14 2002. Measurement of Energy and Demand Savings. Appendix D4. P140. Consulted 17/04/2023. http://www.eeperformance.org/uploads/8/6/5/0/8650231/ashrae_guideline_14-2002_measurement_of_energy_and_demand_saving.pdf

**Claims**

1. Method for training at least one model able to predict a power consumption or production of at least one electric equipment, also called target, said method comprising the following steps:

   (a) obtaining time series data representing the evolution of the power consumption or production of said target over a first period of time,
   (b) comparing said target time series data to known time series data representing the evolution, over a second period of time, of the power consumption or production of known electric equipments, said second period of time being greater than the first period of time, to determine the k known time series data that are the most similar to the target time series data,
   (c) training of a first prediction model or backbone for each of said k known electric equipments, said backbone being able to predict the evolution over time of the consumption or the production of the corresponding known electric equipment, said backbone being trained on the corresponding time series data over the second period of time,
   (d) training at least one second prediction model, called target model, by fine tuning at least one of the first trained prediction model on the time series data of said target over the first period of time.

2. Method according to the preceding claim, wherein each first prediction model and second prediction model is a recurrent neural network, for example a LSTM.

3. Method according to any of the preceding claim, wherein each time series data comprises successive values each associated to a specific time stamp, each value being a tensor comprising dimensions or features representing respectively:

   - the power consumption or production of said target,
   - the outside temperature,
   - the seasonality of the corresponding power consumption or production.

4. Method according to any of the preceding claim, wherein the target model is re-trained at successive time interval, on the time series data of said target over an extended first period of time.

5. Method according to any of the preceding claim, wherein, during training of the backbone and/or during training of the target model, sequences are extracted from the corresponding time series data and are associated by pairs, each pair comprising an input sequence, used as an input data from which to determine a prediction, and a target segment forming a ground-truth prediction to be found by the model on the basis of the first segment, said segment being located temporally after the first segment in the corresponding time series data.

6. Method according to any of the preceding claim, wherein step (b) comprises the following sub-steps:

(b1) converting the time domain signals of the time series data into frequency domain,

(b2) analyzing the frequency components of the signals to identify the frequency bands or peaks that are most important in characterizing the signals,

(b3) extract the features that capture the frequency signature of the signals,

(b4) measure the distance between the frequency signatures of the signals,

(b5) determine the k signals that are the less distant from the target time series data.

7. Method according to any of the preceding claim, wherein, step (b) comprises a selection of the time series data of known electric equipments having a thermal signature similar to the thermal signature of the target.

8. Computer program comprising instructions for implementing the method according to one of claims 1 to 7, when this program is executed by a processor.

9. A non-transitory computer-readable recording medium on which is recorded a program for implementing the method according to one of claims 1 to 7, when said program is executed by a processor.

10. Computer device (1) comprising:

- an input interface (2) to receive at least one input time series signal,
- a memory (3) for storing at least instructions of a computer program according to claim 8,
- a processor (4) accessing to the memory (3) for reading the aforesaid instructions and executing then the method according to one of claims 1 to 7,
- an output interface (5) to provide the trained target model.

Fig. 1

```
┌─────────────────────┐
│                     │
│         S1          │
│                     │
└─────────────────────┘
           │
           ▼
┌─────────────────────┐
│                     │
│         S2          │
│                     │
└─────────────────────┘
           │
           ▼
┌─────────────────────┐
│                     │
│         S3          │
│                     │
└─────────────────────┘
           │
           ▼
┌─────────────────────┐
│                     │
│         S4          │
│                     │
└─────────────────────┘
```

Fig. 2

Fig. 3

EP 4 455 800 A1

Cold Start comparison with different ratio of trainable layers. Deployment for Building143.

Fig. 4

Fig. 5.

## EUROPEAN SEARCH REPORT

Europäisches
Patentamt
European
Patent Office
Office européen
des brevets

**Application Number**

EP 23 17 0126

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QIYUAN WANG ET AL: "Clustering Enabled Few-Shot Load Forecasting", ARXIV.ORG, CORNELL UNIVERSITY LIBRARY, 201 OLIN LIBRARY CORNELL UNIVERSITY ITHACA, NY 14853, 16 February 2022 (2022-02-16), XP091160455, | 1,2,4-6, 8-10 | INV. G05B13/02 |
| Y | * abstract * * Section I * | 3,7 | |
| Y | SINGH NEELESH PRATAP ET AL: "Short-Term Forecasting in Smart Electric Grid Using N-BEATS", 2022 SECOND INTERNATIONAL CONFERENCE ON POWER, CONTROL AND COMPUTING TECHNOLOGIES (ICPC2T), IEEE, 1 March 2022 (2022-03-01), pages 1-6, XP034128132, DOI: 10.1109/ICPC2T53885.2022.9776757 [retrieved on 2022-05-26] * Section I * | 3,7 | |
| A | LEE EUNJUNG ET AL: "Individualized Short-Term Electric Load Forecasting With Deep Neural Network Based Transfer Learning and Meta Learning", IEEE ACCESS, IEEE, USA, vol. 9, 21 January 2021 (2021-01-21), pages 15413-15425, XP011833443, DOI: 10.1109/ACCESS.2021.3053317 [retrieved on 2021-01-26] * the whole document * | 1-10 | TECHNICAL FIELDS SEARCHED (IPC) G05B |

The present search report has been drawn up for all claims

| Place of search | Date of completion of the search | Examiner |
|---|---|---|
| The Hague | 3 October 2023 | Lefeure, Guillaume |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHENG, L ; YU, T.** A new generation of AI: A review and perspective on machine learning technologies applied to smart energy and electric power systems. *Int J Energy Res,* 2019, vol. 43, 1928-1973, https://doi.org/10.1002/er.4333
- **Z. ZHOU ; J. GONG ; Y. HE ; Y. ZHANG.** Software Defined Machine-to-Machine Communication for Smart Energy Management. *IEEE Communications Magazine,* October 2017, vol. 55 (10), 52-60
- **DAWN AN ; NAM H. KIM ; JOO-HO CHOI.** Practical options for selecting data-driven or physics-based prognostics algorithms with reviews. *Reliability Engineering & System Safety,* 2015, vol. 133, 223-236
- **A. DAVID ; M. ALAMIR ; C. L. PAPE-GARDEUX.** Data-driven modelling for HVAC energy flexibility optimization. *2022 IEEE PES Innovative Smart Grid Technologies Conference Europe (ISGT-Europe), Novi Sad, Serbia,* 2022, 1-5

- Methodology for construction of adaptive models for the simulation of energy consumption in buildings. **MOUNA LABIADH.** Modeling and Simulation. Université de Lyon, 2021
- **PARNAMI, A. ; LEE, M.** Learning from few examples: A summary of approaches to few-shot learning. *arXiv preprint arXiv:2203.04291,* 2022
- *Forecasting building energy consumption,* 21 March 2023, https://shop.exchange.se.com/en-US/apps/54008/forecasting-building-energy-consumption
- Measurement of Energy and Demand Savings. *ASHRAE Guideline,* 2002, vol. 14, 140, http://www.eeperformance.org/uploads/8/6/5/0/8650231/ashrae_guideline_14-2002_measurement_of_energy_and_demand_saving.pdf